# EUROPÄISCHE PATENTANMELDUNG

(11) **EP 0 717 092 A1**
(43) Veröffentlichungstag der Anmeldung: **19.06.1996**
(21) Anmeldenummer: 95203361.1
(22) Anmeldetag: 06.12.1995
(51) Int. Cl.: C09K 11/02, C09K 11/58, C09K 11/57, C09K 11/56, C09K 11/88, H01J 29/20

(54) **Lumineszierender Schirm mit einer Leuchtstoffzusammensetzung**

(30) Priorität: 16.12.1994 DE 4444872
(71) Anmelder: Philips Patentverwaltung GmbH, 22335 Hamburg (DE); Philips Electronics N.V., 5621 BA Eindhoven (NL)
(72) Erfinder: Haase, Markus, Dr., c/o Philips Patentverwaltung, D-22335 Hamburg (DE); Bechtel, Helmut, Dr., c/o Philips Patentverwaltung, D-22335 Hamburg (DE); Czarnojan, Wolfram, c/o Philips Patentverwaltung, D-22335 Hamburg (DE); Lauter, Joseph, c/o Philips Patentverwaltung GmbH, D-22335 Hamburg (DE)
(74) Vertreter: Volmer, Georg, Dipl.-Ing.

(57) **Zusammenfassung**

Die Erfindung betrifft einen lumineszierenden Schirm mit einer Leuchtstoffzusammensetzung aus einem sulfid- und/oder selenidhaltige Leuchtstoff mit einer Beschichtung, die Molybdän(VI)-trioxid enthält.

Bei solchen lumineszierenden Schirmen können die Vorteile der effizienten sulfid- und/oder selenidhaltigen Leuchtstoffe genutzt werden und die lumineszierenden Schirme bleiben lange Zeit hell und kontrastreich, weil die Beschichtung, die Molybdän(VI)- trioxid enthält, überraschenderweise als stabilisierender Schutzüberzug wirkt, der die durch niederenergetische Strahlung induzierten Korrosionsvorgänge in sulfid- und/oder selenidhaltigen Leuchtstoffen begrenzt.

## Beschreibung

Die Erfindung betrifft einen lumineszierenden Schirm, insbesondere Flachbildschirm, beispielsweise ein Niederenergie-Kathodenstrahl-Display, mit einer Leuchtstoffzusammensetzung aus einem sulfid- und/oder selenidhaltigem Leuchtstoff mit einer Beschichtung.

Niederenergie-Kathodenstrahl-Displays sind eine neue Entwicklung auf dem Gebiet der Leuchtanzeigevorrichtungen, die durch den Trend zu Flachbildschirmen entstanden ist. Flachbildschirme wurden für die drei Marktsegmente Büroautomatisierung, Audio/Video-Technik sowie Navigation und Unterhaltung entwickelt. Im Bürobereich sind vorallem die mobilen Anwendungen zu nennen, angefangen vom Notebook- Computer, Personal Digital Assistant, Faxgerät bis hin zum Mobiltelefon. Im Audio- und Videobereich sollen die Flachbildschirme nicht nur in Camcordern Verwendung finden, sondern auch in Fernsehgeräten und monitoren. Der dritte Bereich umfaßt Flachbildschirme als Monitore für Navigationssysteme in Autos und Flugzeugen, aber auch die Displays von Spielekonsolen.

Bei Flachbildschirmen ist aus geometrischen und anderen Gründen die maximale Beschleunigungsspannung auf Werte beschränkt, die deutlich unter denen für herkömmliche Kathodenstrahl-Displays liegen. Da andererseits die erreichbare Bildhelligkeit und die Energieeffizienz des Displays mit sinkender Beschleunigungsspannung abnimmt, darf die Beschleunigungsspannung auch nicht zu sehr verringert werden. Niederenergie-Kathodenstrahl-Displays werden deshalb mit Beschleunigungsspannungen im Bereich von etwa 1 bis 10 kV betrieben. Die Beschleunigungs-spannungen liegen damit deutlich unter denen herkömmlicher Kathodenstrahl-Displays, die mit einer Spannung von typischerweise 25 bis 35 kV betrieben werden, sie liegen aber auch deutlich über der Beschleunigungsspannung von Vakuum-Fluoreszenzanzeigen, die etwa 0,01 bis 0,3 kV beträgt.

Es ist üblich, die Leuchtstoffe für Kathodenstrahl-Displays, auch wenn diese herkömmlicher Art sind, einer Oberflächenbehandlung zu unterziehen, damit sie die an sie gestellten Anforderungen besser erfüllen können.

Einmal stellt sich die Anforderung der leichten Dispergierbarkeit der Leuchtstoffpulver in Dispersionslösungen für die photolithografischen Fertigungsprozesse für lumineszierende Schirme. Dafür wurden Dispersionsoberflächenbeschichtungen entwickelt, die frei fließende Pulver ergeben, aus denen sich leicht herstellbare und stabile Dispersionen erzeugen lassen.

Ein anderer Aspekt bei der Entwicklung von Beschichtungen ist der Schutz gegen agressive Chemikalien, die bei der photolithografischen Fertigung eingesetzt werden. Besonders bei dem üblicherweise verwendeten "flow coating"- Prozeß, bei dem Dichromate verwendet werden, werden ungeschützte Leuchtstoffe leicht angegriffen.

Weitere Anforderungen werden an Leuchtstoffe in Hinsicht auf die Farbqualität gestellt. Dafür wird bei den sogenannten "pigmentierten" Leuchtstoffen die Beschichtung aus Dispersionshilfsmitteln ersetzt oder auch kombiniert mit einer zweiten Art von Beschichtung, deren wesentlicher Bestandteil Farbpartikel sind. Die Farbpartikel reduzieren die Reflexion des Umgebungslichtes auf den Leuchtstoffkörnern und erhöhen damit den Kontrast des auf dem lumineszierenden Schirm dargestellten Bildes. Eine weitere Funktion dieser Farbpartikel ist es, bei Leuchtstoffen, deren Farbwerte außerhalb der Norm liegen, diese an die Norm anzugleichen, indem sie als Farbfilter wirken.

Funktionell wiederum andere Beschichtungen werden bei Leuchtstoffen für Vakuum-Fluoreszenz-Anzeigen verwendet, in denen die Anregung mit niederenergetischen ELektronen von einigen 10 Volt bis maximal einigen 100 Volt erfolgt. Hier gilt es Aufladungseffekte während der Anregung der Leuchtstoffe zu verhindern, die die Effizienz der Anregung beeinträchtigen. Beschichtungen für Leuchtstoffpulver für Vakuum-Fluoreszenz-Anzeigen bestehen deshalb aus leitfähigkeitsverbessernden Materialien wie Indium-Zinnoxid, feine Metallpulver u.ä.

Beispielsweise ist es aus der JP 3-26781 (A) bekannt, die Oberfläche von fluoreszierenden Substanzen mit einer komplexen, elektrisch leitfähigen Beschichtung zu versehen, die aus vorzugsweise 0,1 - 15 Gew.-% komplexer elektrisch leitfähiger Partikel besteht, die hergestellt werden, indem elektrisch leitfähige feine Partikel, die vorzugsweise einen mittleren Teilchendurchmesser von 1,0001 - 0,1 µm haben und einen oder mehrere Elemente aus der Gruppe Al, Au, Ag, oder Cu enthalten, auf die Oberfläche von großen elektrisch leitenden Partikeln mit einem mittleren Teilchendurchmesser von vorzugsweise 0.01 -1 µm, die eine oder mehrere Verbindungen aus der Gruppe von SnO₂, Sb₂O₃, ZnO, In₂O₃, TiO₂, Bi₂O₃, CdS oder MoO₃ enthalten, aufgebracht werden.

Ganz neue Anforderungen werden jedoch an Leuchtstoffe bei deren Verwendung für Niederenergie-Kathodenstrahl-Displays gestellt. Um trotz der niedrigen Anregungsspannung eine gute Bildhelligkeit zu erzielen, müssen diese Displays mit hohen Stromstärken betrieben werden. Damit die benötigte Stromstärke nicht unpraktikabel hohe Werte erreicht, müssen gleichzeitig Leuchtstoffe mit hoher Effizienz verwendet werden. Selbst wenn die Architektur des Displays extrem hohe Stromstärken zuläßt, kann die niedrige Effizienz eines Leuchtstoffes nicht beliebig durch Erhöhung der Stromstärke ausgeglichen werden, da die Leuchtintensität des Leuchtstoffes nach zunächst linearem Anstieg mit der Stromstärke schließlich einem Sättigungswert zustrebt. Bei welcher Stromstärke dieser Sättigungswert erreicht wird, hängt von der Art des Leuchtstoffes und dessen Präparationsbedingungen ab.

Für Niederenergie-Kathodenstrahl-Displays ist es deshalb besonders wichtig, daß die eingesetzten Leuchtstoffe eine hohe Effizienz aufweisen und ferner auch, daß sie den besagten Sättigungswert erst bei hohen Stromstärken erreichen. Die Bedingung hoher Effizienz bei ausreichend hohem Sättigungswert erfüllen nur sehr wenige Leuchtstoffe, insbesondere sind es die sulfid- und selenidhaltigen Leuchtstoffe, wie ZnS:Ag, ZnS:Cu, ZnCdSe:Ag u.ä.

Unter den Anregungsbedingungen in Niederenergie-Kathodenstrahl-Displays werden allerdings gerade diese sulfid- und/oder selenidhaltigen Leuchtstoffe sehr schnell degradiert, d.h. der Beschuß mit niederenergetischen Elektronen führt zu einer beschleunigten Abnahme der Leuchtintensität bzw. Effizienz des Leuchtstoffes. Die geringe Eindringtiefe der niederenergetischen Elektronen bewirkt vermutlich, daß die strahlungsinduzierten Reaktionen in den Randschichten der Leuchtstoffkörner konzentriert sind und dort aber verstärkt auftreten.

Man beobachtet jedenfalls bei konventionell beschichteten Displays, die durch Niederenergie-Kathodenstrahlen angeregt werden, eine rasche Abnahme der Helligkeit. Bei farbigen Displays, bei denen üblicherweise drei verschiedene Leuchtstoffe eingesetzt werden, führt dies zusätzlich zu einer langsamen Verschiebung der Farbwerte aller Mischwerte, wenn nicht jeder der eingesetzten Leuchtstoffe gleich schnell degradiert.

Andererseits sollen aber kommerzielle Niederenergie-Kathodenstrahl-Displays, beispielsweise Farbfernseher mit flachem Bildschirm, mehrere tausend Betriebstunden ein gleichbleibend helles Bild mit unverfälschten Farbwerten liefern.

Es ist daher Aufgabe der vorliegenden Erfindung, einen lumineszierenden Schirm mit einer Leuchtstoffzusammensetzung aus einem sulfid- und/oder selenidhaltigen Leuchtstoff mit einer Beschichtung zu schaffen, die bei einer Anregung mit Elektronen von etwa 1 bis 10 kV nicht degradiert.

Erfindungsgemäß wird die Aufgabe gelöst durch einen lumineszierenden Schirm mit einer Leuchtstoffzusammensetzung aus einem sulfid- und/oder selenidhaltigem Leuchtstoff mit einer Beschichtung, die Molybdän(VI)-trioxid enthält.

Bei solchen lumineszierenden Schirmen können die Vorteile der effizienten sulfid- und/oder selenidhaltigen Leuchtstoffe genutzt werden und die lumineszierenden Schirme bleiben lange Zeit hell und kontrastreich, weil die Beschichtung, die Molybdän(VI)- trioxid enthält, überraschenderweise als stabilisierender Schutzüberzug wirkt, der die durch niederenergetische Strahlung induzierten Korrosionsvorgänge in sulfid- und/oder selenidhaltigen Leuchtstoffen begrenzt.

Das stöchiometrische Trioxid von Molybdän(VI) reagiert nicht mit den sulfidischen oder selenidhaltigen Substraten, es wird selbst durch Strahlung nicht degradiert. Das weiße Oxid beeinflusst die Farbwerte der Leuchtstoffe nicht. Dieses Oxid ist hydrophil, sodaß sich die beschichteten Partikel auch leicht dispergieren lassen.

Im Rahmen der vorliegenden Erfindung kann es auch bevorzugt sein, daß der erfindungsgemäß beschichtete Leuchtstoff eine Deckschicht aus einem Dispersionshilfmittel aufweist.

Ansich ist die erfindungsgemäße Beschichtung abriebfest, sodaß der beschichtete Leuchtstoff als solcher transportiert und verwendet werden kann. Es ist jedoch üblich, daß Leuchtstoffpulver eine Deckschicht aus einem Dispersionshilfsmittel erhalten, um die Handhabung des Pulvers zu erleichtern. Da es sich gezeigt hat, daß Dispersionshilfsmittel, insbesondere solche, die oberflächlich gebundene Hydroxylgruppen enthalten, wie z.B. SiO₂, die Alterung der Leuchtstoffe noch verstärken. ist es besonders vorteilhaft, einen sulfid- oder selenidhaltige Leuchtstoff, der eine Deckschicht aus einem Dispersionshilfsmittel wie SiO₂ aufweist, durch eine stabilisierende Zwischenschicht aus Molybdän(VI)-trioxid zu schützen.

Aus dem gleichen Grund ist die Kombination aus einem sulfid- und/oder selenidhaltigen Leuchtstoff mit einer stabilisierenden Beschichtung aus Molybdän(VI)trioxid mit einer Deckschicht, die Pigmente enthält, insbesondere solche mit oberflächlich gebundenen Hydroxylgruppen, besonders bevorzugt.

Zur Herstellung einer Beschichtung für einen sulfid- und/oder selenidhaltigen Leuchtstoff, die Molybdän(VI)- trioxid enthält, wird in einem ersten Schritt aus einer angesäuerten Lösung eines oder mehrerer löslicher Molybdate durch Reaktion mit dem sulfidhaltigen Leuchtstoff auf diesem Leuchtstoff Molybdänblau niedergeschlagen und in einem zweiten Schritt das Molybdänblau zu Molybdän(VI)-trioxid oxidiert wird.

Dies Verfahren erlaubt eine kontrollierte Reaktion zwischen dem sulfid- und/oder selenidhaltigem Substrat und der molybdathaltigen Lösung, weil die Reaktion fortschreitet, solange die Oberfläche der Leuchtstoffpartikel noch nicht vollständig beschichtet ist und stoppt, sobald dieser Zustand erreicht ist.

Es kann bevorzugt sein, daß die angesäuerte Molybdatlösung Phosporsäure enthält. Die Zugabe von Phosphorsäure erhöht die Löslichkeit der Molybdate und fördert eine dünne und gleichmäße Ausbildung der Beschichtung.

Nachstehend wird die Erfindung weiter erläutert und es werden Ausführungsbeispiele aufgeführt.

Die sulfid- und selenidhaltigen Leuchtstoffe, die gemäß der Erfindung mit einer stabilisierenden Beschichtung versehen werden, sind in erster Linie die Leuchtstoffe auf der Basis von ZnS wie ZnS:Ag, ZnS:Cu, ZnS:Mn u.ä. Weiterhin können erfindungsgemäß auch Leuchtstoffe auf der Basis von Cadmiumsulfid, Zinkcadmiumsulfid und Zinksulfidselenid mit einem Selenidgehalt von maximal 20 Mol-% stabilisiert werden.

Diese Leuchtstoffsubstrate können als Primärpartikel oder als mit Pigment und Bindemittel gemischte Granulate vorliegen. Die Korngröße der Leuchtstoffpartikel ist nicht kritisch. Die Primärkorngröße handelsüblicher Leuchtstoffe liegt bei etwa 2 bis 20 µm.

Diese Substratpartikel werden mit einer dünnen und gleichmäßigen Schicht aus MoO₃ versehen. Die Schichtdicke ist so dünn, daß die Elektronen die Schicht ohne wesentlichen Energieverlust durchdringen können. Sie beträgt üblicherweise 0,001 bis 0,2 µm.

Die Beschichtung kann zusätzlich organische oder anorganische Bindemittel wie Latex, Methylcellulose oder Aluminiumphosphat und SiO₂ enthalten, um die Dichtigkeit der Beschichtung noch zu verbessern und die Möglichkeit von chemischen Angriffen auf das Substrat einzuschränken.

Als Ausgangsverbindungen für die Beschichtung werden lösliche Molybdate wie Ammoniumorthomolybdat (NH₄)₂MoO₄, Natriumorthomolybdat Na₂MoO₄ aq, Ammoniumheptamolybdat (NH₄)₆Mo₇O₂₄aq, Natriumheptamolybdat Na₆Mo₇O₂₄aq und ähnliche Verbindungen verwendet.

Zur Herstellung der Beschichtungslösung werden diese Molybdänverbindungen einzeln oder gemeinsam in verdünnter Salzsäure, die 0,1 -1 molar ist, gelöst. Die Konzentration der Molybdate in der salzsauren Lösung kann 0,5 bis 15 Gewichtsprozent (bezogen auf MoO₃) betragen.

Die Beschichtungslösung kann weiterhin bis zu 0,1 mol Phosphorsäure pro Mol Molybdänverbindung enthalten.

Der pH-Wert der Beschichtungslösung muß ≤ 4 sein. Die Reaktion verläuft schneller, wenn der pH-Wert noch niedriger, d.h. zwischen 0 und 1 liegt.

In diese Lösung wird der zu beschichtende Leuchtstoff dispergiert. Durch die Reaktion mit dem sulfid- oder selenidhaltigem Leuchtstoff werden die tietblauen, kolloidalen, unterstöchiometrischen Oxide des Molybdäns ("Molybdänblau") auf der Oberfläche der Leuchtstoffpartikeln ausgefällt. Der Leuchtstoff erscheint dann durch die intensiv blaue Färbung des Niederschlages dieser Oxide mehr oder weniger stark blau angefärbt.

Die tiefblaue Färbung des Molybdänblaus ist auf die gleichzeitige Anwesenheit von niedrigeren Oxidationsstufen neben Molybdän(VI) zurückzuführen (valenzgemischte Verbindungen); die genaue Zusammensetzung ist nicht definiert.

Diese Suspension wird noch 1-5 h weiter gerührt, um die kolloidalen Oxide irreversibel zu altern. Der beschichtete Leuchtstoff wird von der überschüssigen Beschichtungslösung abgetrennt, mit einer Waschflüssigkeit, z.B. Alkohol/Wasser, gewaschen und getrocknet.

Anschließend wird der beschichtete Leuchtstoff einer oxidierenden Nachbehandlung unterworfen, durch die die inteniv gefärbten unterstöchiometrischen Molybdänoxide in das farblose Trioxid umgewandelt wird. Dazu wird der wie beschrieben vorbehandelte Leuchtstoff in einer sauerstoffhaltigen Atmosphäre bei 400°C bis 500°C für 0,5 bis 2 Stunden oder solange bis die blaue Färbung verschwunden ist, behandelt. Falls bei sehr niedrigem pH-Wert gearbeitet wird, um die Reaktion zu beschleunigen, kann auch etwas schwarz-braun gefärbtes Molybdändisulfid gebildet werden. Dies stört nicht, da auch Molybdändisulfid bei der oxidativen Nachbehandlung in Molybdän(VI)-oxid überführt wird.

Durch die oxidative Behandlung wird eine mechanisch und chemisch sehr beständige Beschichtung erhalten, die fest an dem Substrat haftet. Die so hergestellte Beschichtung hat eine Schichtdicke von ca. 15 nm. Durch ESCA- Messungen läßt sich feststellen, daß die Beschichtung die Leuchtstoffsubstrate vollkommen abdeckt, obwohl es für die Erfindung nicht wesentlich ist, daß die Beschichtung die Substratpartikel absolut dicht umschließt.

Die Beschichtung ist hydrophil und ist gut kompatibel mit den üblichen Beschichtungen, sodaß es als Grundschicht für weitere Beschichtungen geeignet ist, die anschließend noch aufgebracht werden können, um die Pulvereigenschaften oder die Farbwerte des Werkstoffes zu verbessern.

Molybdänoxid zeigt keine konkurierende Absoption. Die Beschichtung selber zeigt keine Degradation. Insgesamt wird die Lebensdauer des Werkstoffes durch die Beschichtung, wie sich durch ALT-Tests zeigen läßt, um den Faktor 5-10 gesteigert.

Besonders vorteilhaft ist es, wenn die Beschichtung zusätzlich SiO₂ enthält. Diese SiO₂-Beschichtung kann im Gemisch mit der Molybdänbeschichtung vorliegen oder sie kann getrennt als Deckschicht auf diese Beschichtung aufgebracht werden.

### Ausführungsbeispiel 1

176 g Ammoniumheptamolybdat-4-Hydrat werden in 1000 ml Wasser eingerührt und durch Zugabe von 9000 ml 1-molarer Salzsäure in Lösung gebracht. 1000 g ZnS:Ag-Leuchtstoff werden unter Rühren der Lösung zugefügt und mittels Ultraschall dispergiert. Das Gefäß wird verschlossen und die Suspension etwa 2,5 h weitergerührt. Anschließend werden die jetzt blau gefärbten Leuchtstoffpartikel abzentrifugiert, mehrfach zunächst mit 0.1 molarer Salzsäure, dann mit Alkohol und Wasser gewaschen und bis zur Gewichtskonstanz getrocknet.

Zur Oxidation der Beschichtung wird die Leuchtstoffzusammensetzung in flacher Schicht in einem ventilierten Muffelofen ausgebracht. Die Leuchtstoffzusammensetzung wird mit einer Heizrate von 200°C/h auf 450°C aufgeheizt, 1 h bei 450 °C gehalten, dann mit der natürlichen Ofenkurve abgekühlt.

### Ausführungsbeispiel 2

242 g Na₂MoO₄.2H₂O werden in 1000 ml Wasser eingerührt und durch Zugabe von 9000 ml 0,6-molarer Salzsäure in Lösung gebracht. 1000 g ZnS:Cu-Leuchtstoff werden unter Rühren der Lösung zugefügt und mittels Ultraschall dispergiert. Das Gefäß wird verschlossen und die Suspension etwa 2,5 h weitergerührt. Anschließend werden die jetzt blau gefärbten Leuchtstoffpartikel abzentrifugiert, mehrfach zunächst mit 0.1 molarer Salzsäure, dann mit Alkohol und Wasser gewaschen und bis zur Gewichtskonstanz getrocknet.

Zur Oxidation der Beschichtung wird die Leuchtstoffzusammensetzung in flacher Schicht in einem ventilierten Muffelofen ausgebracht. Das Pulver wird mit einer Heizrate von 200°C/h auf 450°C aufgeheizt, 1 h bei 450 °C gehalten, dann mit der natürlichen Ofenkurve abgekühlt.

### Ausführungsbeispiel 3

242 g Na₂MoO₄.2H₂O werden in 1000 ml Wasser eingerührt und durch Zugabe von 9000 ml 0,6-molarer Salzsäure in Lösung gebracht. 1000 g ZnCdS:Ag-Leuchtstoff werden unter Rühren der Lösung zugefügt und mittels Ultraschall dispergiert. Das Gefäß wird verschlossen und die Suspension etwa 2,5 h weitergerührt. Anschließend werden die jetzt blau gefärbten Leuchtstoffpartikel abzentrifugiert, mehrfach zunächst mit 0.1 molarer Salzsäure, dann mit Alkohol und Wasser gewaschen und bis zur Gewichtskonstanz getrocknet.

Zur Oxidation der Beschichtung wird die Leuchtstoffzusammensetzung in flacher Schicht in einem ventilierten Muffelofen ausgebracht. Das Pulver wird mit einer Heizrate von 200°C/h auf 450°C aufgeheizt, 1 h bei 450 °C gehalten, dann mit der natürlichen Ofenkurve abgekühlt.

### Ausführungsbeispiel 4

242 g Natriummolybdat werden zusammen mit 15 g Phosporsäure (40%ig) in 101 0,5 molarer Salzsäure gelöst. In diese Lösung werden 1000 g ZnS:Cu-Leuchtstoff unter Rühren eingebracht und mit Ultraschall dispergiert. Die Suspension wird einige Stunden bei etwa 50°C gerührt, dann abzentrifugiert und zunächst mit 0,1 molarer Salzsäure, dann mit einem 1:1-Gemisch aus Alkohol und Wasser gewaschen und getrocknet.

Die Oxidation des Pulvers wird wie in Beispiel 1 beschrieben ausgeführt.

### Ausführungsbeispiel 5

### (Deckschicht mit SiO₂)

1000 g Leuchtstoff nach Ausführungsbeispiel 1 bis 4 werden in 7.5 Liter eines 1:1 Gemisches aus Wasser und Aceton eingerührt und die Suspension mit 20 ml einer kolloidalen Kieselsäurelösung (Ludox® AS-40, Du Pont, 40% in Wasser, auf SiO₂ bezogen) versetzt. Der pH-Wert der Lösung soll bei 6 liegen und wird nötigenfalls mit H₂SO₄ nachgestellt. Anschließend wird die Suspension 12 Stunden gerührt.

Die Suspension wird danach filtriert, der Leuchtstoff mit einem 1:1 Gemisch aus Wasser und Aceton gewaschen und schließlich getrocknet.

### Ausführungsbeispiel 6

### (Leuchtstoff mit Pigmentschicht)

1000 g blauleuchtender ZnS:Ag-Leuchtstoff, beschichtet nach Beispiel 1 bis 5, werden in 5000 ml Wasser bei pH 7 suspendiert.

200 g CoAl₂O₄-Pigment werden in 500 ml Wasser suspendiert und die Pigment-Suspension zusammen mit Mahlkugeln aus yttriumstabilisiertem ZrO₂ in eine Rührwerkskugelmühle gegeben. Nach zweistündigem Mahlen bei 750 U/min werden 25 ml der Pigment-Suspension zur Leuchtstoffsuspension zugefügt.

Sofort anschließend werden eine Lösung von 40 g eines Latex (Neocryl A550®,ICI, 40% in Wasser) in 560 ml Wasser zur Suspension gegeben und eine Stunde gerührt. Danach wird die Beschichtungsreaktion durch Zugabe von 500 ml 1-molarer NH₄NO₃-Lösung eingeleitet.

Die Suspension wird danach filtriert, der Leuchtstoff mit einem 1:1 Gemisch aus Wasser und Ethanol gewaschen und schließlich 24 Stunden bei 50°C getrocknet.

### Ausführungsbeispiel 7

### (Leuchtstoff mit Pigmentschicht)

1000 g rotleuchtender ZnCdS:Ag-Leuchtstoff, beschichtet nach Beispiel 1 bis 5 werden in 5000 ml Wasser bei pH 7 suspendiert.

200 g rotes Fe₂O₃-Pigment werden in 500 ml Wasser suspendiert und die Pigment-Suspension zusammen mit Mahlkugeln aus yttriumstabilisiertem ZrO₂ in eine Rührwerkskugelmühle gegeben. Nach zweistündigem Mahlen bei 750 U/min werden 25 ml der Pigment-Suspension zur Leuchtstoffsuspension gegeben.

Sofort anschließend werden eine Lösung von 40 g eines Latex (Neocryl A550®, ICI, 40 % in Wasser) in 560 ml Wasser zur Suspension gegeben und eine Stunde gerührt. Danach wird die Beschichtungsreaktion durch Zugabe von 500 ml 1-molarer NH₄NO₃-Lösung eingeleitet.

Die Suspension wird danach filtriert, der Leuchtstoff mit einem 1:1 Gemisch aus Wasser und Ethanol gewaschen und schließlich 24 Stunden bei 50 °C getrocknet.

### Ausführungsbeispiel 8

Die beschichteten Leuchtstoffpulver nach Ausführungsbeispiel 1 bis 7 werden zur Herstellung eines Flachbildschirmes für eine Farbbildröhre verwendet.

Dazu wird auf die Innenseite des Bildschirmes eine dünne lichtempfindliche Schicht, die bei Belichtung klebrig wird, aufgebracht und getrocknet. Dann wird diese Schicht durch eine Lochmaske belichtet und die belichteten klebrigen kreisförmigen Bildelemente werden mit einer Leuchtstoffzusammensetzung nach Ausführungsbeispiel 2 getont. In einer zweiten und dritten Belichtung werden jeweils andere Bereiche der lichtempfindlichen Schicht mit den Leuchtstoffzusammensetzungen nach Ausführungsbeispiel 1 und 3 getont. Anschließend wird die lichtempfindliche Schicht durch Ausheizen bei Temperaturen > 400°C entfernt. In gleicher Art und Weise hergestellt wird als Standard ein Leuchtschirm mit drei Leuchtstoffzusammensetzungen in den Farben rot, blau und grün, die keine stabilisierende Beschichtung haben.

Diese Bildschirme werden einem beschleunigten Lebendauertest (ALT) bezüglich Bildhelligkeit und Farbwertwiedergabe in Relation zur eingestrahlten Strahlungsenergiemenge einer Strahlung von 4 kV unterzogen.

Während die Effizienz I/I₀ des Standards anfangs stark abfällt und schließlich auf einem Niveau von 20% des Ausgangswertes konstant bleibt, fällt die Bildhelligkeit des Bildschirmes mit den Leuchtstoffen nach der Erfindung nur wenig ab und bleibt bei etwa 80% des Ausgangswertes konstant.

## Patentansprüche

1. Lumineszierender Schirm mit einer Leuchtstoffzusammensetzung aus einem sulfid- und/oder selenidhaltigen Leuchtstoff mit einer Beschichtung, die Molybdän(VI)-trioxid enthält.

2. Lumineszierender Schirm mit einer Leuchtstoffzusammensetzung nach Anspruch 1, dadurch gekennzeichnet,
daß die Leuchtstoffzusammenssetzung eine Deckschicht aus Dispersionshilfsmittel aufweist.

3. Lumineszierender Schirm mit einer Leuchtstoffzusammensetzung nach Anspruch 1 und 2, dadurch gekennzeichnet,
daß er eine Deckschicht mit einem Pigment aufweist.
